# EUROPEAN PATENT SPECIFICATION

(11) **EP 3 928 245 B1**
(45) Date of publication and mention of the grant of the patent: **26.11.2025**
(21) Application number: 20713365.3
(22) Date of filing: 19.02.2020
(51) Int. Cl.: G06F 40/55, G09B 21/00

(54) **DEVICE AND METHOD FOR AUTOMATIC TRANSLATION OF WEATHER REPORTS INTO A SIGN LANGUAGE**
VORRICHTUNG UND VERFAHREN ZUR AUTOMATISCHEN ÜBERSETZUNG VON WETTERBERICHTEN IN EINE ZEICHENSPRACHE
DISPOSITIF ET PROCÉDÉ DE TRADUCTION AUTOMATIQUE DE RAPPORTS MÉTÉOROLOGIQUES EN LANGUE DES SIGNES

(30) Priority: 20.02.2019 IT 201900002443
(43) Date of publication of application: 29.12.2021
(73) Proprietor: Rai Radiotelevisione Italiana S.p.A., 00195 Roma (IT)
(72) Inventor: ALBERICO, Gino, 13881 Cavaglià (BI) (IT); DEL PRINCIPE, Andrea, 10020 Pecetto (TO) (IT); MARINO, Carmen, 10127 Torino (TO) (IT); ROSSINI, Mauro, 10091 Alpignano (TO) (IT)
(74) Representative: Metroconsult Srl
(86) International application number: PCT/IB2020/051358
(87) International publication number: WO 2020/170138

(56) References cited:
- MAZZEI ALESSANDRO ET AL: "Deep Natural Language Processing for Italian Sign Language Translation", 4 December 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 193 - 204, ISBN: 978-3-540-74549-5, XP047097727
- GRIEVE-SMITH A B: "English to American Sign Language Machine Translation of Weather Reports", PROCEEDINGS OF THE SECOND ANNUAL HIGH DESERT LINGUISTICS SOCIETY CONFERENCE, SPRING 1999, UNIVERSITY OF NEW MEXICO, vol. 2, 1999, pages 23 - 30, XP055617155
- JAN BUNGEROTH ET AL: "A German Sign Language Corpus of the Domain Weather Report", PROCEEDINGS OF THE FIFTH INTERNATIONAL CONFERENCE ON LANGUAGE RESOURCES AND EVALUATION (LREC 2006), 24-26 MAY 2006, GENOA, ITALY, 24 May 2006 (2006-05-24), pages 2000 - 2003, XP055617153
- JENS FORSTER ET AL: "RWTH-PHOENIX-Weather: a large vocabulary sign language recognition and translation corpus", PROCEEDINGS OF THE EIGHT INTERNATIONAL CONFERENCE ON LANGUAGE RECOGNITION AND EVALUATION (LREC 2012), 23-25 MAY 2012, ISTANBUL, TR, May 2012 (2012-05-01), XP055617154

## Description

The present invention relates to a method for translation of weather reports into a sign language, e.g. from the Italian language to the Italian sign language (Lingua dei Segni Italiana (LIS)), so that it can be visualized by means of a virtual interpreter. LIS, for example, is a real language that represents, for a signing deaf person, a tool useful for achieving complete cognitive-linguistic-relational development and integration into the community. LIS, which is, among other things, the mother tongue of signing deaf people, is preferred to subtitles because it is more immediate and communicative, and especially because it ensures a better and more correct comprehension of the information.

Modern systems for automatic translation from one language to another utilize techniques based on machine learning. This technology is used by platforms such as Google Translate, Deepl and Bing, which have now become the reference standards for automatic translation. The operation of these translation systems is based on the ability of an information technology system to learn from examples provided thereto. In order to make a machine learning system effective, prior training is required through the use of parallel corpora (or one corpus) consisting of collections of hundreds of thousands of sentences that have been correctly translated in a traditional manner, e.g. by a qualified interpreter. The sentences in the corpora are appropriately chosen to cover, with the examples provided to the system, a broad range of sentences, concepts and expressions. The translation result is also based on a statistical correlation of the elements that make up the sentences to be translated.

The article by A.B. Grieve-Smith: "English to American Sign Language Machine Translation of Weather Reports", Proceedings of the Second Annual High Desert Linguistic Society Conference, Spring 1999, University of New Mexico, XP055617155, relates to a system for translating weather reports from English into American Sign Language (ASL). A methodology is identified that allows for a written representation of ASL signs using alphabetic characters of the ASCII code.

The article by Alessandro Mazzei et al.: "Deep Natural Language Processing for Italian Sign Language Translation", Sat 2015 18th International Conference, Austin, TX, USA, XP047097727, presents an architecture of a translator from written Italian into Italian Sign Language. The architecture comprises four modules: a dependency parser for Italian; an ontology based semantic interpreter; a generator based on expert-systems and combinatory categorial grammars; and a planner to position signs in space. The result of this translation chain is signed by a virtual character.

The above-described prior art suffers from a number of drawbacks, which will be highlighted hereinafter. A first drawback is that the available sign language corpora are small in size, since the resources required for building a large corpus are generally huge and incompatible with the average budget for accessibility projects.

Another drawback of prior-art systems relates to the fact that a larger number of translations errors are generated especially when the system cannot make use of sufficiently large corpora.

A further drawback of the systems known in the art comes from the fact that machine learning systems require especially costly apparatuses due to their algorithmic complexity, thus increasing the costs incurred for operating and maintaining such systems.

It is therefore one object of the present invention to solve these and other problems of the prior art, in particular by providing a deterministic process for automatic translation of weather reports into a sign language, e.g. from the Italian language to the Italian sign language (LIS).

It is another object of the present invention to provide a method for automatic translation of weather reports which does not require particularly large corpora.

It is a further object of the present invention to provide a method for automatic translation of weather reports which allows reducing the presence of translation errors.

It is a further object of the present invention to provide a method which makes it possible to easily present weather reports translated, for example, into LIS by means of a virtual interpreter.

It is yet another object of the present invention to provide a method for automatic translation of weather reports which allows reducing the algorithmic complexity, so that apparatuses that are not particularly expensive can be used, thus reducing the costs incurred for operating and maintaining the systems implementing the present invention.

The invention described herein makes it possible to translate a text of a weather report, e.g. in the Italian language, into a text representative of a sequence of signs, such as those of the LIS language. Considering the LIS language (Lingua dei Segni Italiana) as an example, this can be considered to be a language to all intents and purposes, since it is characterized by precise grammar, morphology and syntax rules, which are however very different from those that characterize the Italian language. Some of such rules derive from characteristics that are typical of visual-spatial communication, and are therefore common to other sign languages, whereas other rules are peculiar to LIS. The presence of such rules is the discriminant factor that permits distinguishing a sign language from any other gestural language or from pantomime. LIS is characterized by systematic sign articulation, similar to the phonological articulation of the vocal language. As far as morphological differences are concerned, in LIS there are neither articles nor specific signs for prepositions; nouns have no gender; there is no verbal conjugation, but only a distinction between past, present and future action, expressed by appropriate additional signs (e.g. the past can be indicated by adding the "done" sign to an action). Since LIS also has, just like other sign languages, a syntax structure that is very different from that of the Italian language, one of the most important problems that is encountered in translation is to establish the rule that governs the order of the signs within a sentence. Furthermore, a number of expression features have great importance in communication, such as the sequence of facial expressions and chest movement, which find an analogy with intonation in oral languages. All of the above-described characteristics, i.e. use of signs, functional parameters and expression variants, contribute to the comprehensibility and quality of the communication. In the specific case of weather reports, the glossary, the syntax structures, the ways of expressing a phenomenon and the combinations into which the expression elements can be composed are encoded and in a finite number. The sentences of a weather report express the location, type and variation over time of atmospheric phenomena that, due to their very nature, have characteristics of repeatability within a certain time span, e.g. one year. The technical solution proposed herein permits translating a text of a weather report by means of a deterministic algorithm that analyzes the input text and then, through a series of steps, outputs the translation thereof. The steps, which will be further described below, relate to substituting and partitioning the text of a weather report, e.g. in Italian, into one or more sentences according to the role of the syntagms and structures contained in the text. With each sentence corresponding sequences of signs are associated, such as, for example, those of LIS. The steps also relate to dividing the sentences according to the syntax, sorting the sentence according to the sentence structure in the sign language, e.g. LIS, within the scope of weather reports.

It is thus possible to utilize the structural, morphological, syntactical and lexical characteristics inherent in the weather report language. This allows obtaining from a weather report a sequence of glosses (or words) representative of a sign language (e.g. LIS), which can be represented as sequences of signs. This technical solution turns out to be advantageous in terms of simplicity, precision and cost compared to using the above-mentioned prior-art algorithms. The sequence of signs, e.g. LIS, can be visualized, for example, by means of a virtual interpreter, which transforms the text sequence of LIS signs into, for example, a video.

Further advantageous features of the present invention will be set out in the appended claims, which are an integral part of the present description.

The invention will now be described in detail by means of some non-limiting embodiments with particular reference to the annexed drawings, wherein:
- Figure 1 represents an illustrative block diagram of a device for translating a text of a weather report in the Italian language into a sequence of LIS signs;
- Figure 2 represents an illustrative diagram of the device of Figure 1 used within a client-server architecture;
- Figure 3 represents an illustrative flow chart of a process carried out by the device of Figure 1 and Figure 2.

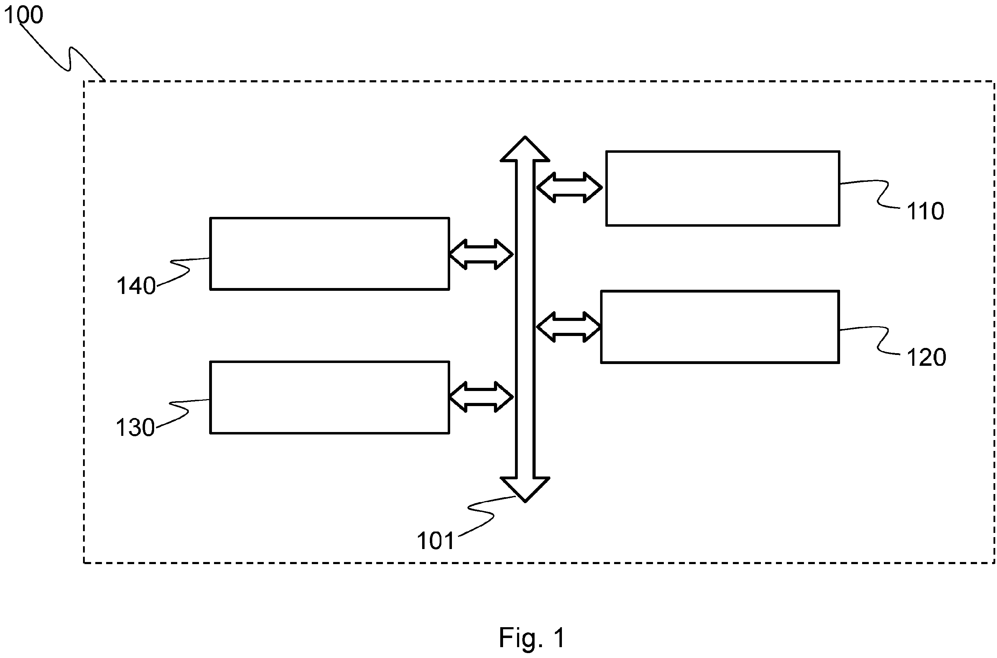

With reference to Figure 1, a translating device 100 allowing a user to translate a text of a weather report, e.g. in the Italian language, into a sequence of signs, e.g. LIS signs, comprises communication means 110, interfacing means 120, memory means 130 and processing means 140. Such means can be interconnected via a communication bus 101. The translating device 100 may be, for example, a smartphone, a tablet, a television set, a computer, etc.

The communication means 110 permit establishing a communication channel to a communication device adapted to transmit at least one weather report in the Italian language. The communication means 110 comprise, for example, a Wi-Fi module, a GSM module and/or an ETHERNET module and/or a DVB-T module (receiver and/or transmitter).

The interfacing means 120 allow the user to interface with the translating device 100, and comprise output and input means, e.g. a display and an alphanumeric keyboard, respectively, or, alternatively, a touchscreen displaying an interactive alphanumeric keyboard, or a remote control.

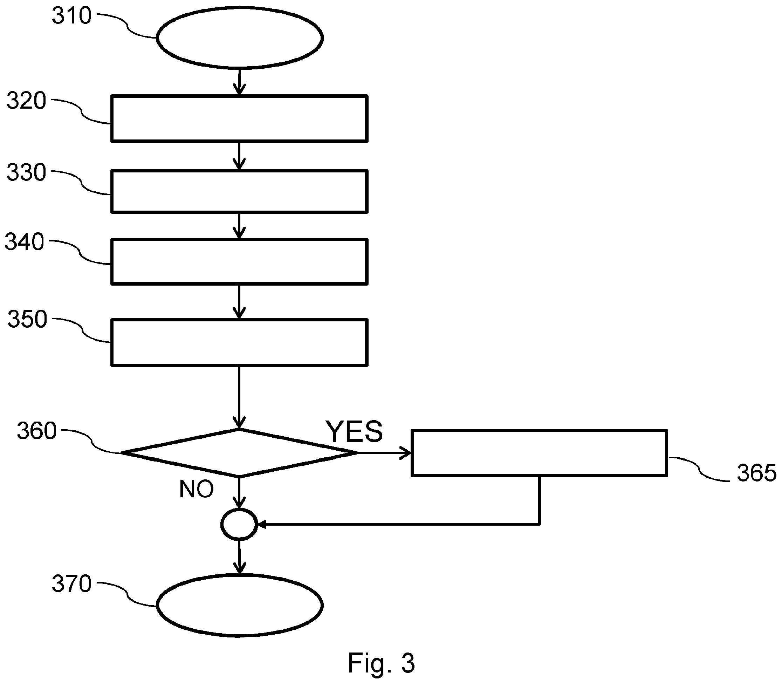

The memory means 130 permit storing the information and the instructions implementing the present embodiment of the invention, and may comprise, for example, a flash-type solid-state memory, optical media, HDDs or magnetic tapes. The information comprises, for example, the text of at least one weather report in the Italian language and at least one set of glosses (or words) corresponding to the signs necessary for expressing in LIS the meaning of the message expressed in the report, whereas the instructions stored in the memory means 230 will be described in detail later on with reference to the flow chart of Figure 3.

The processing means 140 allow processing the information and the instructions stored in the memory means 130, and may comprise, for example, an ARM processor.

A further embodiment of the invention may be implemented, for example, by means of a computer program product comprising portions of software code which can be loaded into a memory of a smartphone, a tablet or a PC equipped with communication means, such as, for example, the Wi-Fi system, the GSM system, etc.

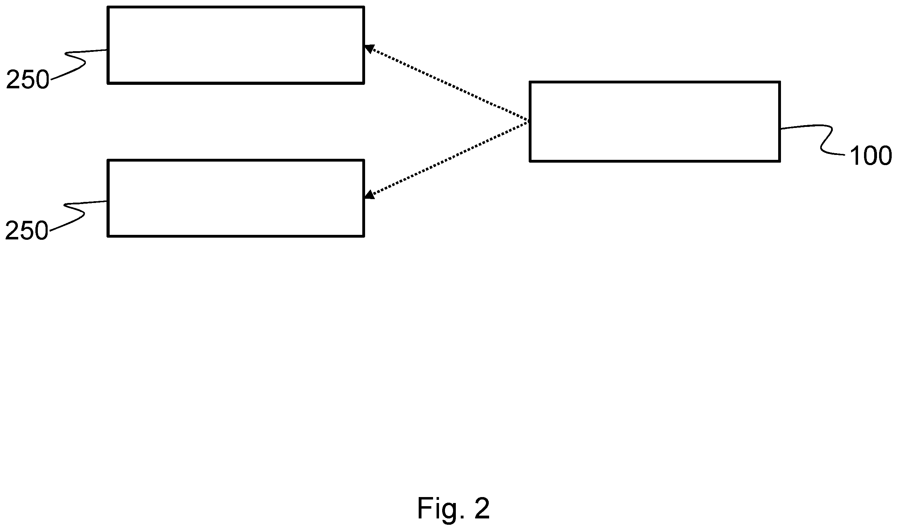

With reference to Figure 2, in another embodiment of the invention the translating device 100 may be implemented, for example, through a remote server, adapted to transmit the sequence of symbols translated into LIS to a client device 250, adapted to present the weather reports translated into LIS, e.g. by means of a virtual interpreter. The client device 250 may be, for example, a smartphone, a tablet or a television set.

Also with reference to Figure 3, the following will describe a method that makes it possible to translate a text of a weather report in the Italian language into a sequence of LIS signs for the present embodiment of the invention.

At step 310, the processing means 140 execute the initialization phase, wherein the communication device 100 is initialized. For example, in this step the processing means 140 may carry out all the operations required to make the device 100 operational, so that the text of at least one weather report in the Italian language can be received and processed.

At step 320, the processing means 140 execute the substitution phase, wherein the expressions in the Italian language contained in the text of the weather report are substituted with a single gloss or a sequence of glosses associable with LIS signs. Because LIS is a visual language in which a series of Italian words can be translated by means of a single sign (and vice versa), with each LIS sign it is possible to associate one LIS gloss (or word). This association can be effected, for example, through the analysis of a set of texts of weather reports in the Italian language and of the corresponding translations made by a qualified LIS interpreter in the course of a given period of time, e.g. one year. **In** this way it is possible to obtain a table of matches between Italian words and LIS glosses. By way of example, Table 1 shows a matching table including matches between Italian words (lower-case letters) and LIS glosses (capital letters).

| Table 1 | |
|---|---|
| *Italian words* | *LIS glosses* |
| regioni alpine e prealpine [Alps and Prealps] | ALPI |
| intensificazione dei fenomeni [intensification of phenomena] | TEMPO_PEGGIORAMENTO |
| settentrionali [northern] | NORD |
| settentrionale [northern] | NORD |
| in successiva estensione serale [extending in the evening] | SERA |
| Piemonte [Piedmont] | PIEMONTE |
| Lombardia [Lombardy] | LOMBARDIA |
| neve [snow] | NEVE |
| Friuli-Venezia Giulia | FRIULI |
| pomeriggio [afternoon] | POMERIGGIO |
| rovesci o temporali [rain or storms] | TEMPORALI PIOGGIA |
| Campania | CAMPANIA |
| Liguria | LIGURIA |

Some nouns like, for example, "Piemonte", "Lombardia" and "neve" already have a direct match with a LIS sign, and therefore the corresponding gloss may coincide with the Italian word. One LIS gloss may correspond to more than one Italian words, due to the lesser diversity of LIS glosses compared to Italian words. At the end of this step, once the substitutions have been made, a text is obtained which contains LIS glosses and some Italian words, e.g. articles and conjunctions, plus punctuation marks. Considering, for example, the following weather report in Italian:
"Dal pomeriggio generale intensificazione dei fenomeni sulle regioni alpine e prealpine ed in special modo su Piemonte e Lombardia settentrionali e sul Friuli-Venezia Giulia, dove avremo rovesci o temporali anche di forte intensità, in successiva estensione serale anche alla Liguria." ["From the afternoon, general intensification of phenomena on Alps and Prealps, and especially in northern Piedmont and Lombardy and in Friuli-Venezia Giulia, where there will be rain or storms, even of great intensity, extending in the evening to Liguria."] and using, for example, the above Table 1, the result of the substitution in the weather report will be as follows:
"Dal POMERIGGIO generale TEMPO_PEGGIORAMENTO sulle ALPI ed in special modo su PIEMONTE e LOMBARDIA NORD e sul FRIULI, dove avremo TEMPORALI PIOGGIA anche di forte intensità, SERA anche alla LIGURIA.".

At step 330, the processing means 140 execute the partitioning phase, wherein the text obtained from the operations carried out at step 320 is partitioned into one or more sentences or cells. In the specific frame of weather reports, the glossary, the syntactic structures, the ways of expressing a phenomenon, and the combinations into which the expressive elements can be composed are encoded and in a finite number. The sentences of a weather report express the location, type and variation over time of atmospheric phenomena that, due to their very nature, have characteristics of repeatability within a certain time range, e.g. one year. Consequently, by analyzing the weather report translations made by a qualified LIS interpreter, e.g. in the course of one year, it is possible to determine the basic linguistic structure (cell) necessary and sufficient for defining the condition of a meteorological situation. This structure may consist, for example, of a triplet comprising a time datum, a place datum and a phenomenon datum, respectively indicating information about when (e.g. evening), where (e.g. Liguria), and what kind of meteorological phenomenon (e.g. rain) is described in the report. In this step, the text of the weather report can be partitioned into one or more sentences or cells comprising information like: (time; place; phenomenon). In order to carry out the partitioning, categories of terms can be associated with each word of the text obtained from the operations carried out at step 320. For example, the time data may be associated with a first category of terms, the place data may be associated with a second category of terms, and the phenomenon data may be associated with a third categories of terms. Ulterior categories of terms may be defined, adapted to specify information of at least one of the previously defined categories of terms. For example, a fourth category of terms may comprise glosses like: "NORD", "SUD", "EST", "OVEST" and "CENTRO", which indicate a more specific area within a larger area belonging to the category of terms corresponding to the place data. With each category of terms, a matching table can be associated including matches between words in the Italian language and LIS glosses, like, for example, the one shown in Table 1. The partitioning of a text obtained from the operations carried out at step 320 may thus be effected by identifying the category to which each term contained in the text belongs, forming cells with, for example, terms belonging to the first, second and third categories of terms and to corresponding ulterior categories of terms, so as to form, for example, cells of the following type (first category; second category, fourth category; third category), e.g. (MATTINA; PIEMONTE, NORD; PIOGGIA). In order to reduce the errors in the partitioning of the text obtained from the operations carried out at step 320, it is also possible to define a set of rules on the basis of the position of the punctuation with respect to the terms that represent one data type, so as to obtain sentences or cells as previously indicated. For example, the punctuation marks full stop (".") and semicolon (";") identify the end of a first cell and the beginning of a second one. Punctuation marks such as commas (",") are more complex to handle because they may indicate a subordinate sentence within a longer sentence, which may either be unimportant for translation purposes or define a new sentence, depending on the text that follows the comma. For example, a set of rules may be defined on the basis of the position of commas relative to the terms that represent one data type, as specified in Table 2.

| Table 2 | | |
|---|---|---|
| *Rule* | *Position of "," and data type* | *Meaning* |
| (i) | place, place | same cell |
| (ii) | place, phenomenon | same cell |
| (iii) | place, phenomenon && place | new cell |
| (iv) | place, "where" | new cell with repetition of last place |
| (v) | phenomenon, time && place | new cell with repetition of last phenomenon |

As exemplified in Table 2, in the case of rule (i), if a first place datum precedes a comma and a second place datum follows the comma, then the term after the comma will be considered as belonging to the same sentence, e.g. as in a list of places. In the case of rule (ii), if a place datum precedes a comma and a phenomenon datum follows the comma, then the term after the comma will be considered as belonging to the same sentence. In the case of rule (iii), if a first place datum precedes a comma and a phenomenon datum and second place datum follow the comma, then the term after the comma will be considered as belonging to a new sentence. In the case of rule (iv), if a place datum precedes a comma and after the comma the text contains the word "where" or any synonyms thereof, then the term after the comma will be considered as belonging to a new sentence, in which the last place datum reported will have to be repeated. In the case of rule (v), if a phenomenon datum precedes a comma and a time datum and a place datum follow the comma, then the term after the comma will be considered as belonging to a new sentence, in which the last phenomenon datum reported will have to be repeated. The rules exemplified in Table 2 are not restrictive, since other rules may be defined.

At step 340, the processing means 140 execute the elimination phase, wherein the stop-words are eliminated from each cell of the sequence of cells obtained at step 330. LIS does not include some syntax elements that are present in the Italian language, such as, for example, pronouns, definite and/or indefinite articles, conjunctions, prepositions, and so on. All such terms are called stop-words and can be included in a list that can be stored into said memory means 130. In this step, the processing means 140 examine the text obtained after the substitution phase and the partitioning phase, which may take into account such elements, and remove the words included in the stop-word list.

At step 350, the processing means 140 execute the sorting phase, wherein the terms of each cell of the sequence of cells obtained at step 340 are sorted according to a predetermined order of the categories of terms defined at step 330. For example, the terms comprised in one cell may follow the order of a typical LIS sentence for a weather report, in which the time data precede the place data, which in turn precede the phenomenon data. Consequently, with reference to the above examples, the terms comprised in one cell may be sorted as follows: (first category; second category, fourth category; third category). For example, considering the following weather report: "Avremo pioggia la sera nel sud della Campania" ["Rain in the evening in southern Campania"], after the substitution phase, the partitioning phase and the elimination phase executed as previously described at steps 320, 330 and 340, respectively, a sequence of glosses belonging to one cell will be obtained which will read like "PIOGGIA SERA SUD CAMPANIA", which after the sorting phase will become "SERA CAMPANIA SUD PIOGGIA". As shown in the example, the gloss "SUD" is a term useful for specifying a place datum (fourth category) which is positioned after the place datum to which it refers. The translation thus obtained is similar to that made by a qualified LIS interpreter.

At step 360, the processing means 140 verify if, for one or more terms, no matches with glosses were found during the substitution phase, and if they were not found in the stop-word list during the elimination phase, i.e. if at least one new term has been introduced into a weather report which is not included in the matching tables and in the stop-word list. In the affirmative case, the processing means 140 will execute step 365, otherwise they will execute step 370.

At step 365, the processing means 140 represent the new terms introduced in a weather report as a sequence of letters corresponding to one or more LIS signs. For example, assuming that the word "varchi" ("clearings") is used in a report, which word is not included in the matching tables and in the stop-word list, this word will be substituted with the sequence of letters "V - A - R - C - H - I", so that each letter can be represented by the corresponding LIS sign. This approach is generally not much appreciated because it slows down the signing activity and requires a greater comprehension effort from a user. For this reason, the processing means 140 may send a notification, e.g. to the user of the device 100 via the interfacing means 120 or to an administrator of the remote server 100 via the communication means 110, for the new terms to be entered into the matching tables or into the stop-word list.

At step 370, the processing means 140 output the weather report translated into a sequence of glosses corresponding to a sequence of LIS signs. In this phase, for example, the processing means 140 may present the weather report translated into LIS by means of a virtual interpreter via the interfacing means 120. Alternatively, with reference to Figure 3, the processing means 140 may send the weather report, in the form of a sequence of glosses corresponding to a sequence of LIS signs, to a virtual interpreter of the client 250 via the communication means.

The advantages of the present invention are apparent from the above description. The device and method according to the present invention advantageously allow for automatic translation of weather reports, e.g. from the Italian language to the Italian sign language (LIS), by using a deterministic process based on classification of and matching between terms of the original language and glosses of the sign language.

A further advantage of the present invention lies in the fact that it provides a method for automatic translation of weather reports which does not require particularly large corpora, which can be based on translations of weather reports made within a time range that does not need be particularly broad.

Another advantage of the present invention lies in the fact that it provides a method for automatic translation of weather reports which allows reducing the presence of translation errors, since it permits the introduction of new terms into the set of terms employed for the translation.

A further advantage of the present invention lies in the fact that it provides a method for automatic translation of weather reports which makes it possible to easily present weather reports translated into the sign language by means of a virtual interpreter.

Another advantage of the present invention lies in the fact that it reduces the algorithmic complexity, in that it is sufficient to search for the terms in the set of used terms. Thus, the present invention can be implemented through the use of devices that are not particularly costly, resulting in lower operating and maintenance costs.

It is also apparent that the present invention is advantageously applicable to systems for translating weather reports into other languages, e.g. implementing systems for translation from English to the British sign language (BSL) or the American sign language (ASL), from English to LIS, from Italian to DGS (German sign language) or from English to DGS.

Of course, without prejudice to the principle of the present invention, the forms of embodiment and the implementation details may be extensively varied from those described and illustrated herein merely by way of non-limiting example, without however departing from the protection scope of the present invention as set out in the appended claims.

## Claims

1. A computer implemented method for automatic translation of a text of a weather report into a text representative of a sequence of signs of a sign language, by means of a translating device comprising processing means (140), said representative text being visualized by means of a virtual interpreter, said method comprising:
- a substitution phase, wherein the expressions contained in the text of the weather report are substituted, by said processing means (140), with a single gloss or a sequence of glosses, which can be associated with the signs of said sign language;
- a partitioning phase, wherein the text obtained from the operations carried out in said substitution phase is partitioned, by said processing means (140), into one or more cells adapted to determine the basic linguistic structure necessary and sufficient for defining the condition of a meteorological situation;
- a sorting phase, wherein the terms of each cell of said sequence of cells obtained in said elimination phase are sorted, by said processing means (140), according to a predetermined order;
- an output phase, wherein said processing means (140) output said weather report translated into said representative text comprising a sequence of glosses obtained by means of the previous phases, and wherein said processing means (140) display said representative text by means of said virtual interpreter through interfacing means (120), **characterised in that** said method further comprises an elimination phase, wherein said processing means (140) eliminate the stop-words from each cell of said sequence of cells obtained in said partitioning phase, **in that**, during the partitioning phase, said cells comprise a time datum, a place datum and a phenomenon datum, which respectively provide information about when, where and what kind of weather phenomenon is described in said weather report and **in that** the partitioning of a text into said cells is accomplished by defining a set of rules based on the position of the punctuation with respect to the terms representing one type of datum.

2. Method according to claim 1, wherein, during the substitution phase, said expressions contained in the text of the weather report are associated with a gloss or a sequence of glosses by means of a predetermined matching table.

3. Method according to claim 2, wherein said time datum is associated with a first category of terms, said place datum is associated with a second category of terms, and said phenomenon datum is associated with a third category of terms.

4. Method according to claim 3, wherein ulterior categories of terms are defined, which are adapted to specify the information of at least one of said first, second and third categories of terms.

5. Method according to claims 3 and 4, wherein the partitioning of a text into said cells is accomplished by identifying the categories to which each term contained in the text belongs, forming the cells constituted by the terms belonging to said first, second and third categories of terms and to corresponding ulterior categories of terms.

6. Method according to claim 1, wherein said set of rules comprises the rule that, if a first place datum precedes a comma and a phenomenon datum or a second place datum follows the comma, then the term after the comma will be considered as belonging to the same cell.

7. Method according to claim 1, wherein said set of rules comprises the rule that, if a first place datum precedes a comma and a phenomenon datum and a second place datum follow the comma, then the term after the comma will be considered as belonging to a new cell.

8. Method according to claim 1, wherein said set of rules comprises the rule that, if a place datum precedes a comma and after the comma the text contains the word "where" or any synonyms thereof, then the term after the comma will be considered as belonging to a new cell, in which the last place datum reported will have to be repeated.

9. Method according to claim 1, wherein said set of rules comprises the rule that, if a phenomenon datum precedes a comma and a time datum and a place datum follow the comma, then the term after the comma will be considered as belonging to a new cell, in which the last phenomenon datum reported will have to be repeated.

10. Method according to claim 1, wherein, during the elimination phase, said stop-words are included into a predetermined list of stop-words.

11. Method according to claim 5, wherein, during the sorting phase, the terms of each cell of said sequence of cells are sorted according to a predetermined order of said categories of terms and corresponding ulterior categories of terms.

12. Translating device (100) comprising communication means (110), interfacing means (120), memory means (130) and processing means (140) adapted to implement the method according to one or more of claims 1 to 11.

13. Computer program product which can be loaded into a memory (130) of a translating device (100), comprising portions of software code adapted to implement the method according to one or more of claims 1 to 11.

## Patentansprüche

1. Computerimplementiertes Verfahren zur automatischen Übersetzung eines Textes eines Wetterberichts in einen Text, der eine Folge von Zeichen einer Gebärdensprache darstellt, mittels einer Übersetzungsvorrichtung, die Verarbeitungsmittel (140) umfasst, wobei der darstellende Text mittels eines virtuellen Dolmetschers visualisiert wird, wobei das Verfahren umfasst:
- eine Ersetzungsphase, in der die im Text des Wetterberichts enthaltenen Ausdrücke durch die Verarbeitungsmittel (140) durch eine einzelne Glosse oder eine Folge von Glossen ersetzt werden, die den Zeichen der Gebärdensprache zugeordnet werden können;
- eine Aufteilungsphase, in der der aus den in der Ersetzungsphase durchgeführten Vorgängen erhaltene Text durch die Verarbeitungsmittel (140) in eine oder mehrere Zellen aufgeteilt wird, die dazu angepasst sind, die grundlegende sprachliche Struktur zu bestimmen, die zur Definition des Zustands einer meteorologischen Situation erforderlich und ausreichend ist;
- eine Sortierphase, in der die Begriffe jeder Zelle der in der Eliminierungsphase erhaltenen Folge von Zellen durch die Verarbeitungsmittel (140) nach einer vorgegebenen Reihenfolge sortiert werden;
- eine Ausgabephase, in der die Verarbeitungsmittel (140) den Wetterbericht ausgeben, der in den repräsentativen Text übersetzt wurde, der eine Folge von Glossen umfasst, die mittels der vorherigen Phasen erhalten wurden, und in der die Verarbeitungsmittel (140) den repräsentativen Text mittels des virtuellen Dolmetschers über Schnittstellenmittel (120) anzeigen, **dadurch gekennzeichnet, dass** das Verfahren ferner eine Eliminierungsphase umfasst, in der die Verarbeitungsmittel (140) die Stoppwörter aus jeder Zelle der in der Partitionierungsphase erhaltenen Zellenfolge eliminieren, wobei die Zellen während der Partitionierungsphase eine Zeitangabe, eine Ortsangabe und eine Phänomenangabe umfassen, die entsprechend Informationen darüber liefern, wann, wo und welche Art von Wetterphänomen in dem Wetterbericht beschrieben wird, und dass die Aufteilung eines Textes in die Zellen durch die Definition eines Satzes von Regeln erfolgt, die auf der Position der Interpunktion in Bezug auf die Begriffe basieren, die eine Art von Angabe darstellen.

2. Verfahren nach Anspruch 1, wobei während der Ersetzungsphase die im Text des Wetterberichts enthaltenen Ausdrücke mittels einer vorbestimmten Zuordnungstabelle einer Glosse oder einer Folge von Glossen zugeordnet werden.

3. Verfahren nach Anspruch 2, wobei die Zeitangabe einer ersten Kategorie von Begriffen zugeordnet ist, die Ortsangabe einer zweiten Kategorie von Begriffen zugeordnet ist und die Phänomenangabe einer dritten Kategorie von Begriffen zugeordnet ist.

4. Verfahren nach Anspruch 3, wobei weitere Kategorien von Begriffen definiert werden, die dazu angepasst sind, die Informationen mindestens einer der ersten, zweiten und dritten Kategorien von Begriffen zu spezifizieren.

5. Verfahren nach den Ansprüchen 3 und 4, wobei die Aufteilung eines Textes in die Zellen dadurch erfolgt, dass die Kategorien, zu denen jeder im Text enthaltene Begriff gehört, identifiziert werden und die Zellen gebildet werden, die aus den Begriffen bestehen, die zu den ersten, zweiten und dritten Kategorien von Begriffen und zu entsprechenden weiteren Kategorien von Begriffen gehören.

6. Verfahren nach Anspruch 1, wobei der Satz von Regeln die Regel umfasst, dass, wenn eine erste Ortsangabe vor einem Komma steht und eine Phänomenangabe oder eine zweite Ortsangabe nach dem Komma folgt, der Begriff nach dem Komma als zur gleichen Zelle gehörig betrachtet wird.

7. Verfahren nach Anspruch 1, wobei der Satz von Regeln die Regel umfasst, dass, wenn eine erste Ortsangabe vor einem Komma steht und eine Phänomenangabe und eine zweite Ortsangabe nach dem Komma folgen, der Begriff nach dem Komma als zu einer neuen Zelle gehörig betrachtet wird.

8. Verfahren nach Anspruch 1, wobei der Satz von Regeln die Regel umfasst, dass, wenn eine Ortsangabe vor einem Komma steht und der Text nach dem Komma das Wort "wo" oder ein Synonym davon enthält, der Begriff nach dem Komma als zu einer neuen Zelle gehörig betrachtet wird, in der die zuletzt gemeldete Ortsangabe wiederholt werden muss.

9. Verfahren nach Anspruch 1, wobei der Satz von Regeln die Regel umfasst, dass, wenn eine Phänomenangabe vor einem Komma steht und eine Zeitangabe und eine Ortsangabe auf das Komma folgen, der Ausdruck nach dem Komma als zu einer neuen Zelle gehörig betrachtet wird, in der die zuletzt gemeldete Phänomenangabe wiederholt werden muss.

10. Verfahren nach Anspruch 1, wobei während der Eliminierungsphase die Stoppwörter in eine vorbestimmte Liste von Stoppwörtern aufgenommen werden.

11. Verfahren nach Anspruch 5, wobei während der Sortierphase die Begriffe jeder Zelle der Folge von Zellen gemäß einer vorbestimmten Reihenfolge der Kategorien von Begriffen und entsprechenden weiteren Kategorien von Begriffen sortiert werden.

12. Übersetzungsvorrichtung (100) mit Kommunikationsmitteln (110), Schnittstellenmitteln (120), Speichermitteln (130) und Verarbeitungsmitteln (140), die angepasst sind, das Verfahren gemäß einem oder mehreren der Ansprüche 1 bis 11 auszuführen.

13. Computerprogrammprodukt, das in einen Speicher (130) einer Übersetzungsvorrichtung (100) geladen werden kann, mit Teilen von Softwarecode, die dazu ausgelegt sind, das Verfahren gemäß einem oder mehreren der Ansprüche 1 bis 11 zu implementieren.

## Revendications

1. - Procédé mis en œuvre par ordinateur pour la traduction automatique d'un texte d'un bulletin météorologique en un texte représentatif d'une séquence de signes d'une langue des signes, au moyen d'un dispositif de traduction comprenant des moyens de traitement (140), ledit texte représentatif étant visualisé au moyen d'un interprète virtuel, ledit procédé comprenant :
- une phase de substitution, dans laquelle les expressions contenues dans le texte du bulletin météorologique sont substituées, par lesdits moyens de traitement (140), par une glose unique ou une séquence de gloses, qui peut être associée aux signes de ladite langue des signes ;
- une phase de partitionnement, dans laquelle le texte obtenu à partir des opérations effectuées dans ladite phase de substitution est partitionné, par lesdits moyens de traitement (140), en une ou plusieurs cellules aptes à déterminer la structure linguistique de base nécessaire et suffisante pour définir l'état d'une situation météorologique ;
- une phase de tri, dans laquelle les termes de chaque cellule de ladite séquence de cellules obtenue dans ladite phase d'élimination sont triés, par lesdits moyens de traitement (140), conformément à un ordre prédéterminé ;
- une phase de sortie, dans laquelle lesdits moyens de traitement (140) émettent ledit bulletin météorologique traduit en ledit texte représentatif comprenant une séquence de gloses obtenue au moyen des phases précédentes, et dans laquelle lesdits moyens de traitement (140) affichent ledit texte représentatif au moyen dudit interprète virtuel par l'intermédiaire de moyens d'interfaçage (120),
**caractérisé par le fait que** ledit procédé comprend en outre une phase d'élimination, dans laquelle lesdits moyens de traitement (140) éliminent les mots vides à partir de chaque cellule de ladite séquence de cellules obtenue dans ladite phase de partitionnement, **par le fait que**, pendant la phase de partitionnement, lesdites cellules comprennent une donnée de temps, une donnée de lieu et une donnée de phénomène, qui fournissent respectivement des informations sur le moment, le lieu et la sorte de phénomène météorologique décrit dans ledit bulletin météorologique, et **par le fait que** l'on accomplit le partitionnement d'un texte en lesdites cellules en définissant un ensemble de règles sur la base de la ponctuation en ce qui concerne les termes représentant un type de donnée.

2. - Procédé selon la revendication 1, dans lequel, lors de la phase de substitution, lesdites expressions contenues dans le texte du bulletin météorologique sont associées à une glose ou à une séquence de gloses au moyen d'une table de correspondance prédéterminée.

3. - Procédé selon la revendication 2, dans lequel ladite donnée de temps est associée à une première catégorie de termes, ladite donnée de lieu est associée à une deuxième catégorie de termes, et ladite donnée de phénomène est associée à une troisième catégorie de termes.

4. - Procédé selon la revendication 3, dans lequel des catégories ultérieures de termes sont définies, qui sont aptes à spécifier les informations d'au moins l'une desdites première, deuxième et troisième catégories de termes.

5. - Procédé selon les revendications 3 et 4, dans lequel le partitionnement d'un texte en lesdites cellules est accompli par identification des catégories auxquelles appartient chaque terme contenu dans le texte, formation des cellules constituées par les termes appartenant auxdites première, deuxième et troisième catégories de termes et aux catégories ultérieures correspondantes de termes.

6. - Procédé selon la revendication 1, dans lequel ledit ensemble de règles comprend la règle selon laquelle, si une première donnée de lieu précède une virgule et qu'une donnée de phénomène ou une deuxième donnée de lieu suit la virgule, alors le terme après la virgule sera considéré comme appartenant à la même cellule.

7. - Procédé selon la revendication 1, dans lequel ledit ensemble de règles comprend la règle selon laquelle, si une première donnée de lieu précède une virgule et qu'une donnée de phénomène et une deuxième donnée de lieu suivent la virgule, alors le terme après la virgule sera considéré comme appartenant à une nouvelle cellule.

8. - Procédé selon la revendication 1, dans lequel ledit ensemble de règles comprend la règle selon laquelle, si une donnée de lieu précède une virgule et qu'après la virgule le texte contient le mot "où" ou tous synonymes de celui-ci, alors le terme après la virgule sera considéré comme appartenant à une nouvelle cellule, dans laquelle la dernière donnée de lieu rapportée devra être répétée.

9. - Procédé selon la revendication 1, dans lequel ledit ensemble de règles comprend la règle selon laquelle, si une donnée de phénomène précède une virgule et qu'une donnée de temps et une donnée de lieu suivent la virgule, alors le terme après la virgule sera considéré comme appartenant à une nouvelle cellule, dans laquelle la dernière donnée de phénomène rapportée devra être répétée.

10. - Procédé selon la revendication 1, dans lequel, lors de la phase d'élimination, lesdits mots vides sont inclus dans une liste prédéterminée de mots vides.

11. - Procédé selon la revendication 5, dans lequel, lors de la phase de tri, les termes de chaque cellule de ladite séquence de cellules sont triés selon un ordre prédéterminé desdites catégories de termes et des catégories ultérieures correspondantes de termes.

12. - Dispositif de traduction (100) comprenant des moyens de communication (110), des moyens d'interfaçage (120), des moyens de mémoire (130) et des moyens de traitement (140) aptes à mettre en œuvre le procédé selon l'une ou plusieurs des revendications 1 à 11.

13. - Produit programme d'ordinateur qui peut être chargé dans une mémoire (130) d'un dispositif de traduction (100), comprenant des parties de code logiciel aptes à la mise en œuvre du procédé selon l'une ou plusieurs des revendications 1 à 11.
